Europäisches Patentamt

European Patent Office

Office européen des brevets

(11) Veröffentlichungsnummer: **0 311 776**
**A2**

(12) **EUROPÄISCHE PATENTANMELDUNG**

(21) Anmeldenummer: **88113835.8**

(22) Anmeldetag: **25.08.88**

(51) Int. Cl.4: **H02H 7/093**

Die Bezeichnung der Erfindung wurde geändert (Richtlinien für die Prüfung im EPA, A-III, 7.3).

(30) Priorität: **15.09.87 DE 3730875**

(43) Veröffentlichungstag der Anmeldung:
**19.04.89 Patentblatt 89/16**

(84) Benannte Vertragsstaaten:
**DE FR GB IT**

(71) Anmelder: **Licentia Patent-Verwaltungs-GmbH**
**Theodor-Stern-Kai 1**
**D-6000 Frankfurt/Main 70(DE)**

(72) Erfinder: **Wipperfürth, Franz-Josef, Ing. grad.**
**Egersdorfer Weg 9**
**D-8501 Cadolzburg(DE)**

(74) Vertreter: **Kuhn, Rudolf, Ing.(grad)**
**Licentia-Patent-Verwaltungs-GmbH**
**Theodor-Stern-Kai 1**
**D-6000 Frankfurt 70(DE)**

(54) **Schutzschaltung zur Drehzahlbegrenzung eines Waschmaschinen-Antriebsmotors.**

(57) Störungen in der Drehzahlelektronik dürfen kein unzulässiges Hochschleudern der Wäschetrommel zum falschen Programmzeitpunkt verursachen. Dies muß mit Hilfe von Schutzvorrichtungen verhindert werden. Schutzvorrichtungen bekannter Art unterbrechen mit Hilfe einer Schaltung über ein Relais den Motorstromkreis bei Erreichen eines vorher eingestellten Drehzahlmaximalwertes immer.

Die neue Schutzvorrichtung spricht nur dann an, falls eine bestimmte Trommeldrehzahl (n) überschritten wird und gleichzeitig vom Benutzer keine Schleudersolldrehzahl vorgewählt wurde. Mit dem Antriebsmotor 1 ist ein Fliehkraftschalter mit Einschaltkontakt 6 gekoppelt, der ein Relais 4 ansteuert. Das Relais 4 unterbricht mit Hilfe seines Ausschaltkontakts 3 den Motorstromkreis. Die Schutzvorrichtung ist nur dann wirksam, wenn ein von der Drehzahlelektronik 5 angesteuertes Schaltelement 7 geschlossen ist.

Das Verfahren zum Schutz gegen unzulässiges Antriebsmotor-Hochschleudern eignet sich insbesondere für Haushaltwaschmaschinen.

Fig.1

## Verfahren zum Schutz gegen unzulässiges Trommelantriebsmotor-Hochschleudern, insbesondere für Haushaltwaschmaschinen.

Die Erfindung betrifft ein Verfahren zum Schutz gegen unzulässiges Trommelantriebsmotor-Hochschleudern, insbesondere für Haushaltwaschmaschinen nach dem Oberbegriff des Anspruchs 1.

Antriebsmotore von Wäschetrommeln werden hauptsächlich über elektronische Regelkreise bzw. über steuerbare elektronische Halbleiter, beispielsweise Triacs, in ihrer Drehzahl geregelt.
Treten nun im Regelkreis Störungen auf, kann der Triac durch Fehlansteuerung den Antriebsmotor zum unerwünschten Zeitpunkt auf unzulässige Drehzahlbereiche hochlaufen lassen. Vornehmlich bei unzulässigem Hochschleudern entstehen hierbei Beschädigungen am Gerät oder an Einrichtungen. Gegen derartige unkontrollierte Betriebsfälle sind deshalb Sicherheitsvorrichtungen vorzusehen.

Aus der DE - OS 28 03 278 ist eine "Vorrichtung zur Leerlaufdrehzahlbegrenzung bei einem elektromotorischen Antrieb " bekannt. Hier ist auf der Antriebswelle ein in radialer Richtung federndes und nach innen vorgespanntes Stellelement vorgesehen, welches unter dem Einfluß der Fliehkraft bei umlaufender Welle nach außen bewegbar und derart mit Begrenzungseinrichtungen für den Motorstrom gekoppelt ist, daß die Drehzahl des leerlaufenden Motors auf einen vorgegebenen oberen Grenzwert beschränkbar ist.

Aus der DE - OS 35 20 099 ist eine "Sicherheitseinrichtung für ein elektromotorisch angetriebenes Werkzeug" bekannt. Sie weist eine Schaltung auf, mit der man über ein Relais nach Erreichen eines Drehzahl-Maximalwertes die Stromzufuhr unterbrechen kann. Das Relais wird über einen Tachogenerator und eine daran anschließende Sicherheitschaltung angesteuert. Die Einrichtung dient vorallem dazu, bei Ausfall der Regelelektronik den Motor nicht beliebig hochdrehen zu lassen und bei Erreichen eines vorher eingestellten Drehzahlmaximal-Wertes die Stromzufuhr zu unterbrechen.

Hierbei wird nun die Stromzufuhr immer bei Erreichen des vorher eingestellten Drehzahl-Maximalwertes unterbrochen.

Der Erfindung liegt nun die Aufgabe zugrunde, bei Regelkreisstörungen in der Antriebsmotordrehzahlregelung den Motorstromkreis nur in bestimmten Fällen zu unterbrechen.

Diese Aufgabe gemäß der Erfindung wird durch die kennzeichnenden Merkmale des Anspruchs 1 gelöst.

Der mit der Erfindung erzielbare Vorteil besteht insbesondere darin, daß die Schutzvorrichtung nur dann den Motorstromkreis unterbricht, wenn das Motordrehzahl-Steuerglied zum falschen Programmzeitpunkt voll durchgesteuert wird. Im Normalbetriebsfall, beim Hochschleudern, spricht die Schutzvorrichtung nicht an.

Zwei Ausführungsbeispiele der Erfindung sind in der Zeichnung dargestellt und werden im folgenden näher beschrieben.
Es zeigen:
Fig. 1 den Blockschaltplan einer Schutzvorrichtung gegen unzulässiges Trommelantriebsmotor-Hochschleudern mit Hilfe einer Fliehkraftregelung,
Fig. 2 den Blockschaltplan einer Schutzvorrichtung gegen unzulässiges Trommelantriebsmotor-Hochschleudern mit Hilfe eines Tachogenerators.

Der Antriebsmotor 1 einer Wäschetrommel liegt in Reihe mit einem elektronischem Steuerglied 2, vorzugsweise einem Triac und einem Ausschaltkontakt 3 an Netzspannung. Der Ausschaltkontakt 3 wird über ein Relais 4 angesteuert, welches durch eine bekannte Drehzahlelektronik 5 mit Spannung versorgt wird. Mit dem Antriebsmotor 1 ist ein nicht näher dargestellter Fliehkraftschalter bekannter Art gekoppelt, der einen Einschaltkontakt 6 bei einer ganz bestimmten Trommeldrehzahl (n) mechanisch betätigt. Dieser Einschaltkontakt 6 liegt in Reihe mit einem, ebenfalls von der Drehzahlelektronik 5 angesteuertem Schaltelement 7. Die Trommeldrehzahl (n), bei deren Überschreitung der Fliehkraftschalter den Einschaltkontakt 6 schließt ist so gewählt, daß sie unterhalb der sogenannten Geräteresonanz-Drehzahl, jedoch oberhalb der sogenannten Sanftanlauf-Enddrehzahl liegt. Bei geschlossenem Schaltelement 7 und geschlossenem Einschaltkontakt 6 des Fliehkraftschalters öffnet das Relais 4 seinen Ausschaltkontakt 3 und der Motorstromkreis ist unterbrochen.
Im Normalbetriebsfall regelt das Steuerglied 2 über seine Steuerleitung 8 die Trommeldrehzahl. Wird hingegen das Steuerglied 2 zum falschen Programmzeitpunkt, infolge Störungen in der Drehzahlelektronik 5, voll durchgeschaltet wird ein unerwünschtes und gefährliches Hochschleudern vermieden. Nach Unterbrechung der Stromzufuhr fällt die Trommeldrehzahl unter die eingestellte Trommeldrehzahl (n) und der Einschaltkontakt 6 öffnet infolge abnehmender Fliehkräfte wieder. Das Relais 4 fällt ab und der Ausschaltkontakt 3 schließt. Sofern die Drehzahlelektronik 5 das Steuerglied 2 weiterhin fehlerhaft ansteuert erfolgt ein neuer Trommelhochlauf auf die Trommeldrehzahl (n). Diese periodischen Trommelhochläufe machen den Benutzer auf einen Kundendienstfall aufmerksam.

Das Schaltelement 7 ist maßgebend für die Unterbrechung der Motorstromzufuhr und wird von der Drehzahlelektronik 5 nur dann geschlossen, wenn vom Benutzer keine Schleudersolldrehzahl vorgewählt wurde. Es ist immer dann geöffnet und verhindert eine Unterbrechung des Motorstroms (Einschaltkontakt 6 · des Fliehkraftschalters wirkungslos), wenn bei Geräten mit sogenanntem "Unwuchtkontrollsystem" und bei vorgewählter Schleudersolldrehzahl der Sanftanlauf mit einer genügend kleinen Unwucht, d. h. bei ordnungsgemäß verteilter Wäsche, abgeschlossen wurde und ein Schleuderhochlauf erlaubt ist.

Auch bei Geräten ohne "Unwuchtkontrollsystem" und vorgewählter Schleudersolldrehzahl ist das Schaltelement 7 direkt nach dem Ende der Sanftanlaufphase geöffnet. Besitzen Geräte weder ein "Unwuchtkontrollsystem" noch einen Sanftanlauf, ist das Schaltelement 7 direkt nach Wahl der Schleudersolldrehzahl geöffnet.

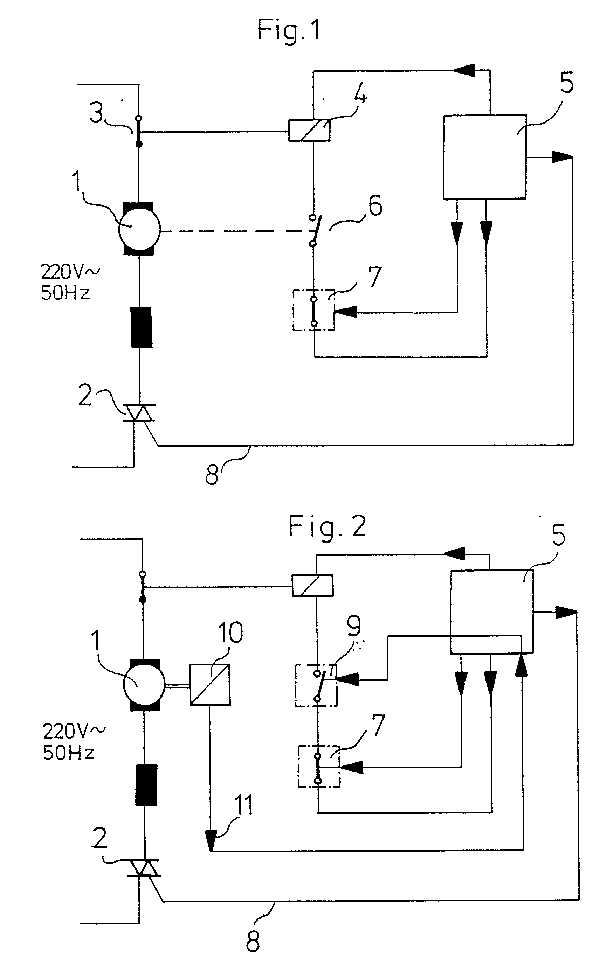

In Fig. 2 ist der Einschaltkontakt 6 durch ein elektronisches Schaltelement mit Einschaltkontakt 9 und der Fliehkraftschalter durch einen vom Antriebsmotor 1 angetriebenen Tachogenerator 10 bekannter Bauart ersetzt. Bei Überschreitung der Trommeldrehzahl (n) erfolgt aufgrund einer Vergleichsmessung mit dem Trommeldrehzahl-Istwert 11 eine Ansteuerung des elektronischen Schaltelementes mit Einschaltkontakt 9 durch die Drehzahlelektronik 5. Dieses elektronische Schaltelement besitzt eine sogenannte "Memory-Schaltung" , speichert ein Fehlverhalten in der Steuerleitung 8 und hält daraufhin seinen Einschaltkontakt 9 dauernd geschlossen. Periodisches Hochlaufen der Wäschetrommel auf die Trommeldrehzahl (n) erfolgt in diesem Fall nicht. Der Funktionsablauf bzw. die Ansteuerung des Schaltelements 7, welches für das Außerkraftsetzen der Schutzvorrichtung verantwortlich ist, erfolgt analog wie in Fig. 1 beschrieben.

**Ansprüche**

1. Verfahren zum Schutz gegen unzulässiges Trommelantriebsmotor-Hochschleudern, insbesondere für Haushaltwaschmaschinen mit einem Antriebsmotor und hieran gekoppelten Fliehkraftschalter mit Einschaltkontakt oder mit angekoppeltem Tachogenerator, welcher aufgrund einer Drehzahlvergleichsmessung eine Ansteuerung eines elektronischen Schaltelements mit Einschaltkontakt durch eine Drehzahlelektronik vornimmt und der Einschaltkontakt ein Relais ansteuert, welches daraufhin den Antriebsmotor-Stromkreis unterbricht, dadurch gekennzeichnet, daß in die Zuleitung zum Relais (4) bzw. in Reihe zum Einschaltkontakt (6) des Fliehkraftschalters oder in Reihe zum elektronischen Schaltelement mit seinem Einschaltkontakt (9) ein zusätzliches Schaltelement (7) angeordnet ist.

2. Verfahren nach Anspruch 1, dadurch gekennzeichnet, daß das Schaltelement (7) durch die Drehzahlelektronik (5) nur dann schließbar ist, wenn eine bestimmte Trommeldrehzahl (n) überschritten wird und gleichzeitig vom Benutzer kein Schleuderdrehzahl-Sollwert vorgewählt worden ist.

3. Verfahren nach Anspruch 2, dadurch gekennzeichnet, daß die Trommeldrehzahl (n) unterhalb der sogenannten Geräteresonanzdrehzahl, jedoch oberhalb der sogenannten Sanftanlauf-Enddrehzahl liegt.

4. Verfahren nach den Ansprüchen 1 oder 2, dadurch gekennzeichnet, daß das Schaltelement (7) durch die Drehzahlelektronik (5) immer dann geöffnet wird, wenn bei Waschmaschinen mit sogenanntem Unwuchtkontrollsystem und bei gleichzeitig vom Benutzer vorgewählter Schleuder-Solldrehzahl, der Sanftanlauf mit einer genügend kleinen Unwucht abgeschlossen ist.

5. Verfahren nach den Ansprüchen 1 oder 2, dadurch gekennzeichnet, daß das Schaltelement (7) bei Waschmaschinen ohne Unwuchtskontrollsystem und bei vorgewählter Schleuder-Solldrehzahl direkt nach dem Ende der Sanftanlaufphase geöffnet ist.

6. Verfahren nach den Ansprüchen 4 oder 5, dadurch gekennzeichnet, daß das Schaltelement (7) bei Waschmaschinen, die weder ein Unwuchtskontrollsystem noch einen Sanftanlauf besitzen direkt nach Vorwahl der Schleuder-Solldrehzahl geöffnet ist.

7. Verfahren nach Anspruch 1, dadurch gekennzeichnet, daß das elektronische Schaltelement mit seinem Einschaltkontakt (9) eine Memoryschaltung besitzt, welche eine Fehlansteuerung einer Steuerleitung (8) zu einem Steuerglied (2) erkennt, speichert und daraufhin seinen Einschaltkontakt (9) dauernd geschlossen hält.

Fig.1

Fig. 2